# EUROPEAN PATENT SPECIFICATION

(11) **EP 3 424 235 B1**
(45) Date of publication and mention of the grant of the patent: **02.11.2022**
(21) Application number: 17708594.1
(22) Date of filing: 20.02.2017
(51) Int. Cl.: H04W 36/00, H04W 36/14, H04W 84/12

(54) **METHOD AND DEVICES TO SUPPORT VOLTE (VOICE OVER LTE) CALL CONTINUITY**
VERFAHREN UND GERÄTE ZUR UNTERSTÜTZUNG DER KONTINUITÄT VON VOLTE (VOICE OVER LTE)
MÉTHODE ET APPAREILS POUR SOUTENIR LA CONTINUITÉ DE VOLTE (VOICE OVER LTE)

(30) Priority: 29.02.2016 GB 201603509
(43) Date of publication of application: 09.01.2019
(73) Proprietor: NEC Corporation, Tokyo 108-8001 (JP)
(72) Inventor: SHARMA, Vivek, Tokyo 108-8001 (JP)
(74) Representative: MacDougall, Alan John Shaw
(86) International application number: PCT/JP2017/006064
(87) International publication number: WO 2017/150234

(56) References cited:
- WO-A1-2015/106714
- US-A1- 2014 219 246
- US-A1- 2015 078 337
- "3rd Generation Partnership Project; Technical Specification Group Services and System Aspects; Single Radio Voice Call Continuity (SRVCC); Stage 2 (Release 13)", 3GPP STANDARD; 3GPP TS 23.216, 3RD GENERATION PARTNERSHIP PROJECT (3GPP), vol. SA WG2, no. V13.1.0, 15 December 2015 (2015-12-15), pages 1-69, XP051046474, [retrieved on 2015-12-15]

## Description

### Technical Field

The present invention relates to a communication system. The invention has particular but not exclusive relevance to wireless communication systems and devices thereof operating according to the 3rd Generation Partnership Project (3GPP) standards or equivalents or derivatives thereof, such as the Universal Terrestrial Radio Access Network (UTRAN, referred to as a 3G network) and the Long Term Evolution (LTE) of UTRAN (E-UTRAN, referred to as a 4G network), including LTE-Advanced (LTE-A). The invention also has some but not exclusive relevance to wireless communication systems and devices thereof operating according to the Global System for Mobile Communications (GSM) standards or equivalents or derivatives thereof (generally referred to as 2G) and to Wireless Local Area Networks (WLAN).

### Background Art

LTE networks are packet switched (PS) for voice and data, unlike legacy 3G networks which are a combination of PS for carrying data and Circuit Switched (CS) for carrying voice. 2G networks also provide CS voice connections. To date, many telecommunications network operators continue to use legacy (3G or 2G) networks to route voice calls.

For LTE, standards bodies have defined standards for voice services which are provided using only the LTE network, referred to as Voice over LTE (VoLTE).

VoLTE has various potential advantages, such as high-definition voice calls. However, problems can occur when VoLTE calls are initiated, or ongoing, when a mobile device is in an area where LTE coverage is limited. Furthermore, it may be the case that a mobile device is in an area in which the received LTE radio signal is good enough for data communications but not good enough for VoLTE communications.

WO2015106714A1 discloses a method to manage call continuity in a network environment including a circuit-switched network and an IP multimedia subsystem (IMS) network. A UE monitors one or more ongoing sessions in an IMS network, and the ongoing sessions contain at least one conference call. The UE detects a network-switching event for the UE to switch from the IMS network to a circuit-switched CS network. The UE then determines the one or more ongoing sessions within the IMS network to be released or transferred to the CS network. Finally, the UE performs a session transfer procedure for transferring the determined sessions.

US2014219246A1 discloses a method for providing indication of an SRVCC handover. The method includes: a first wireless communication device participating in a voice call with a second wireless communication device via a connection between the first wireless communication device and a first network; the first wireless communication device determining a condition indicative of an impending SRVCC handover of the first wireless communication device from the first network to a legacy network; in response to the condition, the first wireless communication device formatting a message including an indication that the first wireless communication device is going to perform the SRVCC handover and sending the message to the second wireless communication device prior to performance of the SRVCC handover.

3GPP Technical Specification (TS) 23.216 V13.1.0 specifies the architecture enhancements for Single Radio Voice Call Continuity (SRVCC) between various access systems for voice calls that are anchored in the IMS.

### Technical Problem

One example of managing VoLTE calls where LTE coverage is limited is for an eNB to trigger a Single Radio Voice Call Continuity (SRVCC) handover to a legacy network (3G/2G). However, if this approach is used, the VoLTE setup may fail if, for example, the UE does not support SRVCC. As a result, call drop rate is increased due to call setup failure. Also, SRVCC is a complex mechanism which requires changes at the UE, eNB and MME level.

The present invention seeks to provide a communication system and associated apparatus and methods for addressing or at least partially ameliorating the above issues.

### Summary of Invention

The invention is carried out according to the appended independent claims. Optional features of the invention are carried out according to the dependent claims.

In one aspect of the invention there is provided a communication device for a long term evolution (LTE) communication system, the communication device comprising: a controller and a transceiver, wherein the controller is configured to control the communication device to: establish and engage in Voice over LTE (VoLTE) communication via a communication connection with a base station; obtain information indicating at least one criterion for determining whether VoLTE communication via the communication connection with the base station can be sustained; perform signal measurements for signals received from the base station; and determine whether VoLTE communication via the communication connection with the base station can be sustained based on whether or not the signal measurements meet the at least one criterion, wherein the determination of whether or not the signal measurements meet the at least one criterion is based on a comparison of said signal measurements with at least one threshold, the controller is further configured to control the communication device to receive assistance information to assist with selection of and/or connection to at least one non-LTE radio access technology (RAT) for establishing a voice call, the assistance information, in case of a target RAT is a Wireless Local Area Network (WLAN), includes information that allows the communication device to skip authentication in the WLAN security, and when moving from a network to the WLAN, the same credentials as used in the network and included in the assistance information are used to skip the authentication and connect to the WLAN.

Also disclosed is a base station for a long term evolution (LTE) communication system, the base station comprising: a controller and a transceiver, wherein the controller is configured to control the base station to: establish and engage in Voice over LTE (VoLTE) communication via a communication connection with a communication device; and transmit, to the communication device, information indicating a criterion for determining whether VoLTE communication via a communication connection with the base station can be sustained.

Also disclosed is a communication device for a long term evolution (LTE) communication system, the communication device comprising: a controller and a transceiver, wherein the controller is configured to control the communication device to:
establish and engage in Voice over LTE (VoLTE) communication via a communication connection with a base station; perform signal measurements for signals received from the base station; provide at least one result of said signal measurements, to the base station,
while the communication device is engaged in an attempt to establish VoLTE communication via the communication connection; receive, from the base station,
responsive to provision of the at least one result of said signal measurements, a message indicating that the communication connection cannot be sustained; and establish, on receipt of said message indicating that the communication connection cannot be sustained, a communication connection via a non-LTE radio access technology (RAT) in order to establish or maintain a voice call via that non-LTE RAT.

Also disclosed is a base station for a long term evolution (LTE) communication system, the base station comprising: a controller and a transceiver, wherein the controller is configured to control the base station to: establish and engage in Voice over LTE (VoLTE) communication via a communication connection with a communication device; receive, from the communication device, while the base station is engaged in an attempt to establish VoLTE communication via the communication connection, at least one result of signal measurements made by the communication device; determine, based on the received at least one result of the signal measurements, whether or not the communication connection can be sustained; and transmit, to the communication device, when it has been determined that the communication connection cannot be sustained, a message indicating that the communication connection cannot be sustained.

Also disclosed is a communication device for a long term evolution (LTE) communication system, the communication device comprising: a controller and a transceiver wherein the controller is configured to control the communication device to: setup and engage in VoLTE communication via a communication connection with a base station; receive, when the communication device is engaged in at least one of: (i) ongoing VoLTE communication via the communication connection; and (ii) an attempt to establish VoLTE communication via the communication connection, from the base station, a message indicating that the communication connection cannot be sustained, wherein the message comprises an indication that a cause of the message is voice call continuity; and establish, on receipt of said message indicating that the communication connection cannot be sustained, a communication connection via a non-LTE radio access technology (RAT) in order to establish or maintain a voice call via that non-LTE radio access technology (RAT).

In another aspect of the invention there is provided a base station for a long term evolution (LTE) communication system, the base station comprising: a controller and a transceiver wherein the controller is configured to control the base station to: establish and engage in VoLTE communication via a communication connection with a communication device; determine, when the base station is engaged in at least one of: (i) ongoing VoLTE communication via the communication connection; and (ii) an attempt to establish VoLTE communication via the communication connection, that the communication connection cannot be sustained; and transmit, to the communication device, when it has been determined that the communication connection cannot be sustained, a message indicating that the communication connection cannot be sustained, wherein the message comprises an indication that a cause of the message is voice call continuity, wherein the controller is further configured to control the base station to: transmit, to the communication device, assistance information to assist with selection of and/or connection to at least one non-LTE radio access technology, RAT, for establishing a voice call, the assistance information, in case of a target RAT is a Wireless Local Area Network (WLAN), includes information that allows the communication device to skip authentication in the WLAN security, and when the communication device (3-1) moves from a network to the WLAN, the same credentials as used in the network and included in the assistance information are used to skip the authentication and connect to the WLAN.

Also disclosed is a core network node of a long term evolution (LTE) communication system, the core network node comprising a controller, wherein the controller is configured to control the core network node to: receive, from a base station, information indicating a communication connection associated with a voice over LTE (VoLTE) voice call has been released and information indicating a possibility that said voice call will be continued via another radio access technology (RAT); notify an internet protocol multimedia subsystem (IMS) that the communication connection associated with the VoLTE voice call has been released; and notify the IMS of the possibility that said voice call will be continued via another RAT.

Also disclosed is a communication node of a Universal Terrestrial Radio Access Network (UTRAN), the communication node comprising a controller, wherein the controller is configured to control the communication node to: receive, from an internet protocol multimedia subsystem (IMS), information for supporting continuation of a voice call via a radio access technology (RAT) of the UTRAN, wherein a voice over LTE (VoLTE) connection over which the voice call was previously being provided has been released, and wherein said information comprises context information associated with the VoLTE connection.

Aspects of the invention extend to corresponding systems, methods, and computer program products such as computer readable storage media having instructions stored thereon which are operable to program a programmable processor to carry out a method as recited in the claims and/or to program a suitably adapted computer to provide the apparatus described in the aspects and possibilities set out above or recited in any of the claims.

Each feature disclosed in this specification (which term includes the claims) and/or shown in the drawings may be incorporated in the invention independently (or in combination with) any other disclosed and/or illustrated features. In particular but without limitation the features of any of the claims dependent from a particular independent claim may be introduced into that independent claim in any combination or individually.

Example embodiments of the invention will now be described by way of example only with reference to the attached figures in which:

### Brief Description of Drawings

[fig.1]Figure 1 schematically illustrates a mobile telecommunication system to which example embodiments of the invention may be applied;
[fig.2]Figure 2 is a block diagram illustrating the main components of the mobile telephone forming part of the system shown in Figure 1;
[fig.3]Figure 3 is a block diagram illustrating the main components of a base station forming part of the system shown in Figure 1;
[fig.4]Figure 4 shows an example timing diagram illustrating a method performed by components of the communication system when a voice call is initiated;
[fig.5]Figure 5 shows an example timing diagram illustrating an alternative method performed by components of the communication system when a voice call is initiated;
[fig.6]Figure 6 shows an example timing diagram illustrating a further alternative method performed by components of the communication system when a voice call is initiated; and
[fig.7]Figure 7 shows an example timing diagram illustrating a method performed by components of the communication system when a voice call is transferred to a different RAT.

### Description of Embodiments

### Overview

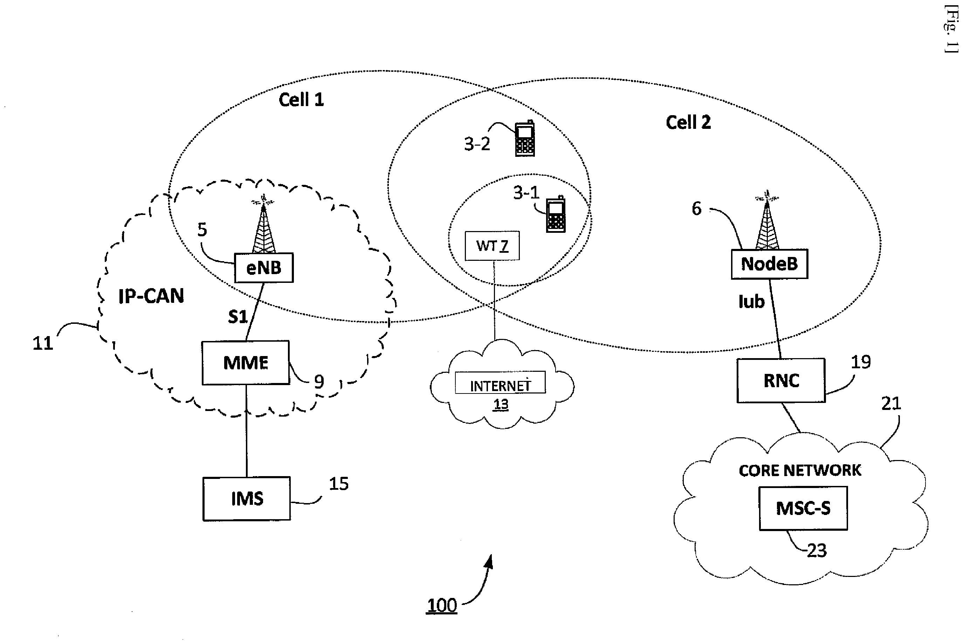

Figure 1 shows a mobile (cellular) communication network 100 in which mobile devices 3 (or other such user equipment) can communicate with other such devices and/or other communication entities via an E-UTRAN base station (eNB) 5, operating an associated ('4G') cell, and/or via a UTRAN base station (NodeB) 6, also operating an associated ('2G/3G' circuit-switched) cell, and/or via a wireless local area network (WLAN) termination (WTs) 7 each of which, in this example, comprises a single access point (AP) but may comprise a plurality of APs.

Communication via the eNB 5 is typically routed through a Mobility Management Entity (MME) 9 which is accessed using an E-UTRA radio access technology (RAT). Communication via the NodeB 6 is typically routed through a Radio Network Controller (RNC) 19 and a core network 21, which are accessed using a UTRA radio access technology (RAT). Communication via the AP of the WT 7 is typically via an associated access controller (AC) and the internet.

As those skilled in the art will appreciate, whilst two mobile devices 3, base stations 5 and 6 and WT 7 are shown in Figure 1 for illustration purposes, the system, when implemented, will typically include other base stations, WTs and mobile devices. Furthermore, only some of the elements of each of the three exemplary RAT networks have been shown in Figure 1 for simplicity.

The eNB 5 is configured to co-ordinate with the MME 9 via an associated interface (S1 interface) and the mobile devices 3 within the cell to set up radio bearers (e.g. a E-UTRAN Radio Access Bearer, 'E-RAB') for communication between the mobile devices 3 and the MME 9. In the context of VoLTE, the eNB 5 and the MME 9 are collectively referred to as the Internet Protocol (IP) Connectivity Access Network (IP-CAN) 11. It will be appreciated that, typically, an IP-CAN 11 will comprise a plurality of eNBs 5.

In order to provide VoLTE services to the UEs 3, the IP-CAN 11 provides the mobile devices 3 with connectivity to an IP Multimedia Subsystem or IP Multimedia Core Network Subsystem (IMS) 15.

The IMS 15 manages the delivery of IP multimedia services to the mobile devices 3, thereby allowing multimedia based sessions between the mobile devices 3. The IMS 15 employs a Session Initiation Protocol (SIP) for establishing, managing and terminating such sessions on IP networks.

The core network 21 connected to the NodeB 6 includes a mobile switching centre server (MSC-S) 23 which is responsible for managing call setup and mobility for the mobile devices 3 served by the NodeB 6. The MSC-S 23 can communicate with the IMS 15 for conveying SIP signalling between the mobile devices 3 and the IMS 15.

As shown in Figure 1, the mobile devices 3-1 and 3-2 are located near the edge of the cell operated by the eNB 5, where radio signals received by the mobile devices 3-1 and 3-2 tend to be of low strength. However, both of the mobile devices 3-1 and 3-2 located in areas of good coverage by the cell operated by the NodeB 6. Furthermore, the mobile device 3-1 also receives good coverage from the WT 7.

Beneficially, in this example, when the mobile device 3-1 is about to initiate a voice call, it first determines whether the LTE signal strength is sufficient for a VoLTE call by comparing a signal strength measurement with at least one VoLTE threshold received from the eNB 5. If the LTE signal strength is sufficient, the mobile device 3-1 initiates a VoLTE call, while if the LTE signal strength is not sufficient, the mobile device 3-1 selects another RAT (in this example either the 3G RAT of the NobeB 6 or the WLAN RAT of the WT 7) and initiates a voice call using the alternative RAT. In this example, the eNB 5 also provides the mobile device 3-1 with additional information for use by mobile device 3-1 to assist with the selection of and/or connection to the alternative RAT (referred to as 'assistance information').

Furthermore, in this example, when the mobile device 3-1 is connected to the eNB 5 with an ongoing VoLTE call, the mobile device 3-1 provides measurement reports to the eNB 5. Beneficially, if the eNB 5 determines that the LTE signal strength is no longer sufficient for VoLTE, an enhanced RRC Connection Release procedure is performed. The enhanced RRC Connection Release procedure involves sending a message to the mobile device 3-1 to indicate release of the VoLTE connection. The message beneficially includes information indicating the cause of the release to be for the purposes of 'voice call continuity' (e.g. in a cause information element, 'IE', with a value set to 'voice call continuity'). In this example, the eNB 5 also provides the mobile device 3-1 with additional information for use by mobile device 3-1 to assist with the selection of and/or connection to the alternative RAT (e.g. 2G, 3G, WLAN) for the purposes of continuing the voice call (referred to as 'assistance information'). The assistance information may include cell system information for the alternative RAT, in order to allow faster acquisition of system information by the mobile device 3-1, which in turn allows faster resumption of the voice call, providing a better user experience.

It can be seen, therefore, that this process advantageously avoids the signalling associated with failed VoLTE connection attempts when a VoLTE call cannot properly be supported (or there is a relatively high likelihood of failure) because of insufficient radio coverage (even where radio coverage is sufficient for a 4G data service).

In this example, the eNB 5 also communicates, directly or indirectly, with the IMS 15 to notify the IMS that the VoLTE connection of the mobile device 3-1 has been released, but that the mobile device 3-1 may try to continue the voice call via another RAT (e.g. 2G, 3G, WLAN). When the mobile device 3-1 attempts to continue the voice call via a connection to a new RAT, the mobile device 3-1 indicates that the connection is for voice call continuity. In order to support the voice call continuity, the context for the VoLTE connection is maintained in the IMS and can thus be obtained from the IMS by the MSC-S while a connection for continuing the voice call is being established via the new RAT. The context for the VoLTE connection may include information such as calling party, called party and QoS parameters. Alternatively or additionally, the context may include subscription parameters such as parameters relating to accounting - for example a user's remaining credit (for 'pay as you go' users) or a user's usage limits for voice, video etc. (for pay monthly users).

It can be seen, therefore, that this process advantageously has the potential to reduce the incidence of VoLTE call failures arising from degradation in radio coverage by allowing a VoLTE call to be continued, relatively quickly, as a voice call via a new RAT (e.g. 2G, 3G, WLAN) even where SRVCC cannot be used (e.g. because SRVCC is not supported).

In a beneficial variation of this example, when the mobile device 3-1 attempts to initiate a voice call, the eNB 5 determines whether the LTE signal strength is sufficient for a VoLTE call by comparing a signal strength measurement with at least one VoLTE threshold. If the LTE signal strength is sufficient, the VoLTE call is progressed. However, if the LTE signal strength is not sufficient, the VoLTE call connection is released/rejected. In this variation, on release/rejection the eNB 5 may also provide the mobile device 3-1 with additional information for use by the mobile device 3-1 to assist with the selection of and/or connection to an alternative RAT (referred to as 'assistance information'). This assistance information may be provided in a release/rejection message or separately. The release/rejection message may also include an appropriately set cause of the release/rejection (this may, for example, be a cause information element, 'IE', with a value set to 'voice call continuity' or similar).

It can be seen, therefore, that this variation also advantageously avoids much of the signalling associated with failed VoLTE connection attempts when a VoLTE call cannot properly be supported (or there is a relatively high likelihood of failure) because of insufficient radio coverage (even where radio coverage is sufficient for a 4G data service). This variation also has the benefit of reducing the complexity at the mobile device side.

### Mobile Device

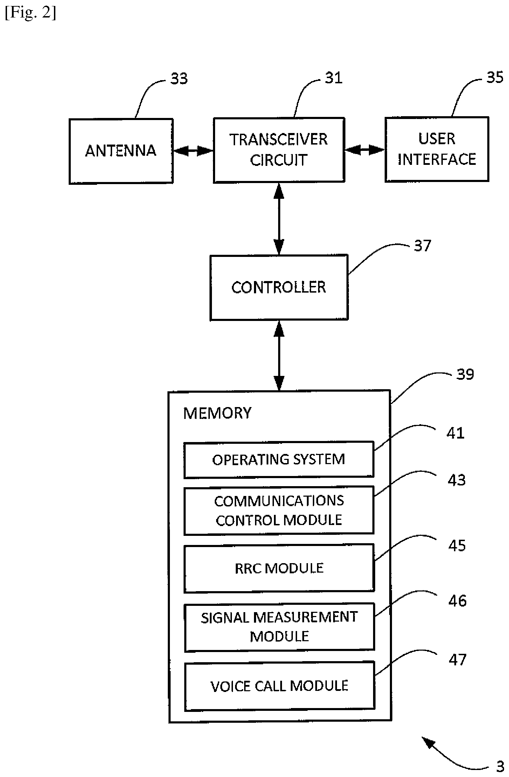

Figure 2 is a block diagram illustrating the main components of a mobile device 3 as shown in Figure 1. As shown, the mobile device 3 has a transceiver circuit 31 that is operable to transmit signals to and to receive signals from an eNB 5 (or NodeB 6 or WT 7) via one or more antenna 33. The operation of the transceiver circuit 31 is controlled by a controller 37 in accordance with software stored in memory 39. The software includes, among other things, an operating system 41, a communications control module 43, a radio resource control (RRC) module 45, a signal measurement module 46, and a voice call module 47.

The communications control module 43 controls communication with the base station 5 including, for example, allocation of resources to be used by the transceiver circuit 31 in its communications with the base station 5.

The radio resource control module 45 controls the transition between various RRC modes and handles associated RRC signalling to/from the base station 5 (via the voice call module 47).

The signal measurement module 46 obtains signal strength measurements (e.g. Reference Signal Received Power ('RSRP'), Reference Signal Received Quality ('RSRQ') or Reference Signal Strength Indicator ('RSSI')) of signals (e.g. reference signals) received via the antenna 33. The signal measurement module 46 can send the signal strength measurements to the eNB 5.

The voice call module 47 is responsible for initiating and managing voice calls via LTE (i.e. VoLTE) or via a different RAT. In this example, the voice call module 47 determines whether a VoLTE call can be initiated (e.g. based on one or more thresholds for the signal strength measurements). It will be appreciated, however, that determination of whether a VoLTE call can be initiated may be performed at the base station 5. The voice call module 47 also manages continuation (or attempted continuation) of voice calls, that begin as VoLTE calls but can no longer be supported (e.g. because of a change in radio conditions), via an alternative RAT.

The voice call module 47 selects the RAT for initiating or continuing with a voice call (where VoLTE cannot or can no longer be used). The RAT selection may be based on assistance information provided by the eNB 5 to aid selection of the RAT.

### Base Station (eNB)

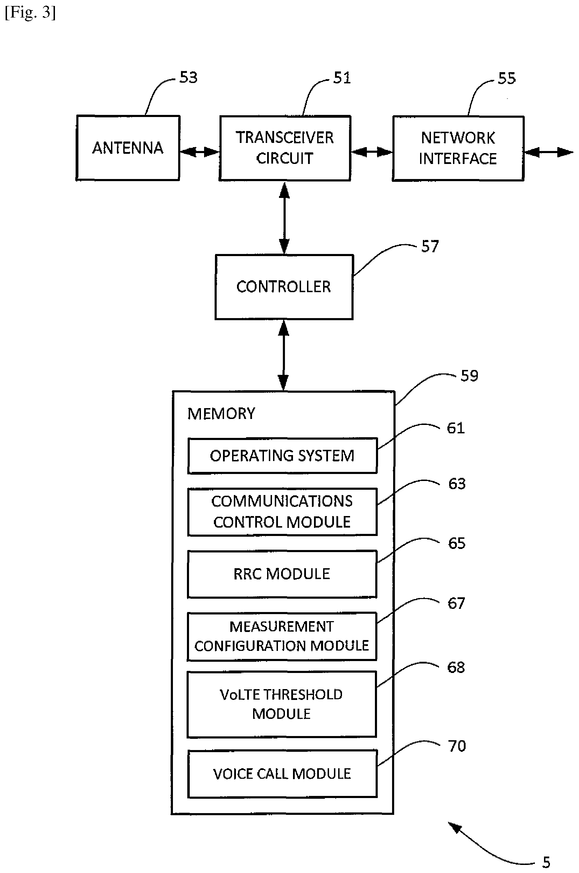

Figure 3 is a block diagram illustrating the main components of a base station (eNB) 5. The base station 5 is a fixed communication node providing services to mobile device 3 within its coverage area. As shown, the base station 5 includes a transceiver circuit 51 which transmits signals to, and receives signals from, the mobile device 3 via at least one antenna 53. The base station 5 also transmits signals to and receives signals from the MME 9 and other neighbouring base stations 5 via a network interface 55 (for communicating with neighbouring base stations 5 and with the MME 9 using the X2 and S1 interfaces, respectively).

The operation of the transceiver circuit 51 is controlled by a controller 57 in accordance with software stored in memory 59. The software includes, among other things, an operating system 61, a communications control module 63, a radio resource control (RRC) module 65, a measurement configuration module 67, a VoLTE threshold module 68, and a voice call module 70.

The communications control module 63 controls communications between the base station 5 and the mobile devices 3, and the network devices such as the MME 9.

The radio resource control module 65 controls the radio communication resources used between the base station 5 and the mobile devices 3 attached thereto. In particular, the radio resource control module 65 controls the establishment of an RRC connection between the base station 5 and the mobile devices 3 within its cell(s).

The measurement configuration module 67 is responsible for generating measurement configurations for configuring the mobile device 3-1 to perform measurements such as signal strength measurements (e.g. Reference Signal Received Power ('RSRP'), Reference Signal Received Quality ('RSRQ') or Reference Signal Strength Indicator ('RSSI')) for the purposes determining whether the signal strength is sufficient for VoLTE.

The VoLTE threshold module 68 stores one or more signal strength thresholds for the purposes determining whether the signal strength is sufficient for VoLTE. In this example, the VoLTE threshold module 68 also provides the mobile device 3 with these thresholds. It will be appreciated, however, that if determination of whether a VoLTE call can be initiated is performed at the base station 5, then the VoLTE threshold module 68 may carry out the comparison required for such a determination.

The voice call module 70 is responsible for the base station's part in initiating and managing voice calls via LTE (i.e. VoLTE). The voice call module 70 also provides information (e.g. the assistance information) for supporting selection of alternative RATs in the event that a VoLTE voice call cannot, or can no longer, be supported by the prevailing radio conditions. The assistance information may, for example, inform the mobile device of a priority order for different RATs (e.g. respective priorities for 2G, 3G, WLAN) and/or may include target cell system information that reduces the burden on the mobile device when setting up / continuing a voice call thereby allowing a new/ongoing call to be established more quickly. The voice call module 70 also provides continuity information for supporting continuity of voice calls via alternative RATs, to other network entities, such as functions of the IMS 15, for example notifying the IMS that a mobile device 3 has been released using an enhanced RRC connection release procedure.

In this example the voice call module 70 also determines the priority order for different RATs, although it will be appreciated this could be pre-programmed (for example set by an operator).

In the above description, the mobile device 3 and the base station 5 are described for ease of understanding as having a number of discrete modules (such as the communications control modules and the media access control modules). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

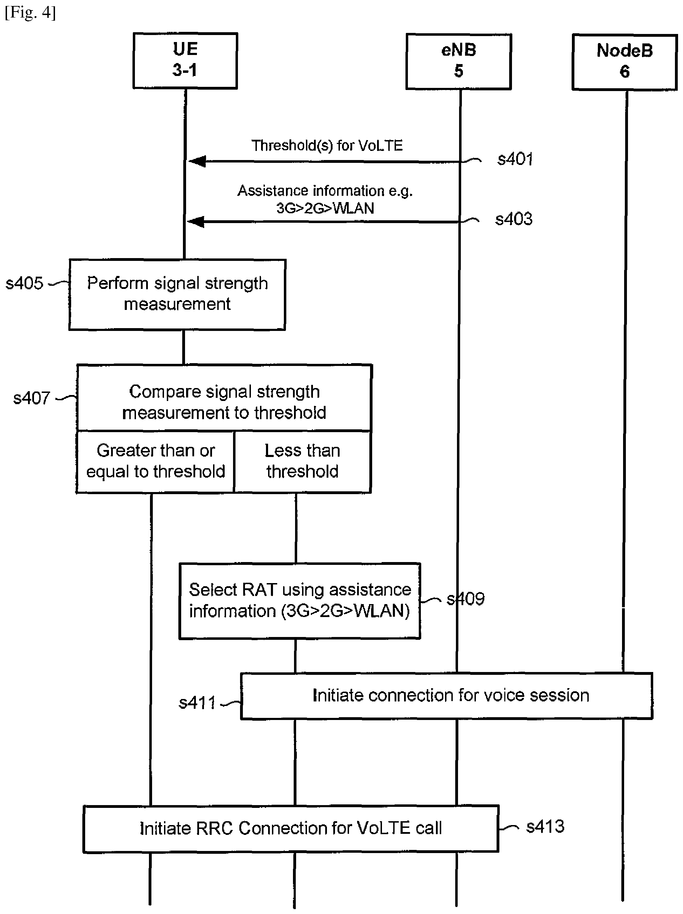

A number of different examples will now be described that illustrate how different aspects of the invention can be put into effect using the above mobile device (UE) 3 and base station (eNB) 5. The examples will be described with reference to the timing diagrams shown in Figures 4 to 7.

### <Initiating Voice Call based on VoLTE Threshold Comparison at UE>

Figure 4 illustrates, in simplified form, the procedure for initiating a voice call taking into account at least one threshold for initiating a VoLTE voice call.

At step s401, the eNB 5 transmits one or more thresholds associated with VoLTE to the UE 3-1. In this example, the threshold(s) are broadcast by the eNB 5 to any UEs 3 which are present within the cell operated by eNB 5. In this example the one or more thresholds are included in a system information block (SIB).

In this example, the one or more thresholds for VoLTE comprise at least one of a reference symbol received power (RSRP) threshold, a received signal strength indicator (RSSI) threshold, and a reference signal received quality (RSRQ) threshold. Each threshold value transmitted to the UE 3-1 indicates a respective value below which a VoLTE call is considered not to be viable.

At step s403, assistance information is transmitted by the eNB 5 to the UE 3-1. In this example the assistance information is broadcast by the eNB 5 to any UEs 3 within its cell in an SIB (either with or separately from the one or more thresholds). The assistance information includes information for assisting the UE 3-1 to connect to a new cell, and in this example the assistance information comprises RAT priority information. The RAT priority information identifies an order of priority of any RATs which may be part of the overlaid coverage received by the UE 3-1. In this case, and as can be seen from Figure 1, UE 3-1 is within the coverage the cell of the 3G NodeB 6 and the WLAN cell of the WT 7. As shown in Figure 4, exemplary assistance information comprises information specifying that 3G RATs have the highest priority, followed by 2G RATs and then WLAN RATs. A UE receiving this information will therefore attempt to connect in the first instance to a 3G RAT for a voice call if available, and then to a 2G RAT where connection cannot be made with the 3G RAT; and in turn to a WLAN RAT if connection to the 2G RAT is not possible.

The assistance information may also include configuration information of the target RATs, and/or of target cells. The configuration information is provided in order to expedite the process of the UE 3-1 connecting to a new cell or RAT. The configuration information may include system information for the target cells. Where the target RAT is WLAN, the configuration information may include WLAN identifiers such as a Basic Service Set Identifier (BSSID), Access Point Identifier (APID), Service Set Identifier (SSID) and/or a Homogeneous Extended Service Set Identifier (HESSID).

In the invention, the configuration information provides assistance in the security procedure, allowing the UE 3-1 to skip WLAN security. Alternatively, and not part of the invention, the configuration information allows a lightweight security mechanism to be performed. For example, in the standard for public-access Wi-Fi referred to as 'Hotspot 2.0', a UE authorised with an Extensible Authentication Protocol Subscriber Identity Module (EAP-SIM) moving from a 3GPP network may not need to be authenticated by the WLAN. Accordingly, the configuration information provides information allowing the UE 3-1 to connect to a WLAN without authentication and using the same credentials as used in the 3GPP network, in order to reduce signaling load.

It is noted that where the UE 3-1 connects to a 2G or 3G RAT, security keys associated with the UE 3-1 are transferred by the source RAT (e.g. 4G RAT) to the target RAT (e.g. 3G RAT), in a similar way as performed in SRVCC.

At step s405 the UE 3-1 measures the signal strength of reference signals transmitted by the eNB 5. As will be appreciated by those skilled in the art, the signal strength measurement may be performed before or after the UE 3-1 receives the one or more thresholds and/or the assistance information from the eNB 5.

At step s407 the UE 3-1 compares the signal strength measurement of the reference signals to the corresponding threshold value for the VoLTE. For example, if the threshold value received by the UE 3-1 is an RSRP threshold value, the RSRP signal strength measurement of the reference signal transmitted by the eNB 5 is compared to this RSRP threshold. If the signal strength measurement is less than the threshold, the UE does not initiate a VoLTE call via the eNB 5, and instead proceeds to step s409 where the UE 3-1 selects an alternative RAT using the assistance information. As the exemplary assistance information in Figure 4 specifies that a 3G RAT has a higher priority than a WLAN RAT, at step s411 the UE 3-1 initiates a collection with the NodeB 6 in order to establish a voice call.

If at step s407 the signal strength measurement is greater than or equal to the threshold value, the UE 3-1 proceeds to step s413 where an RRC connection is initiated with the eNB 5 in order to establish a VoLTE call. In this example, the coverage check is performed before a random access (RA) procedure is commenced in pursuance of the RRC connection (i.e. before 'message 1' of the RA procedure). It will be appreciated, however, that the coverage check may be performed later, for example after a random access (RA) procedure has commenced but before an RRC connection request (i.e. 'message 3') is sent.

Although not illustrated in Figure 4, if a voice call cannot be established via the NodeB 6, then using the assistance information the UE 3-1 may proceed to attempt to establish a collection with the WLAN WT 7 in order to place the voice call.

### Initiating Voice Call based on VoLTE Threshold Comparison at eNB

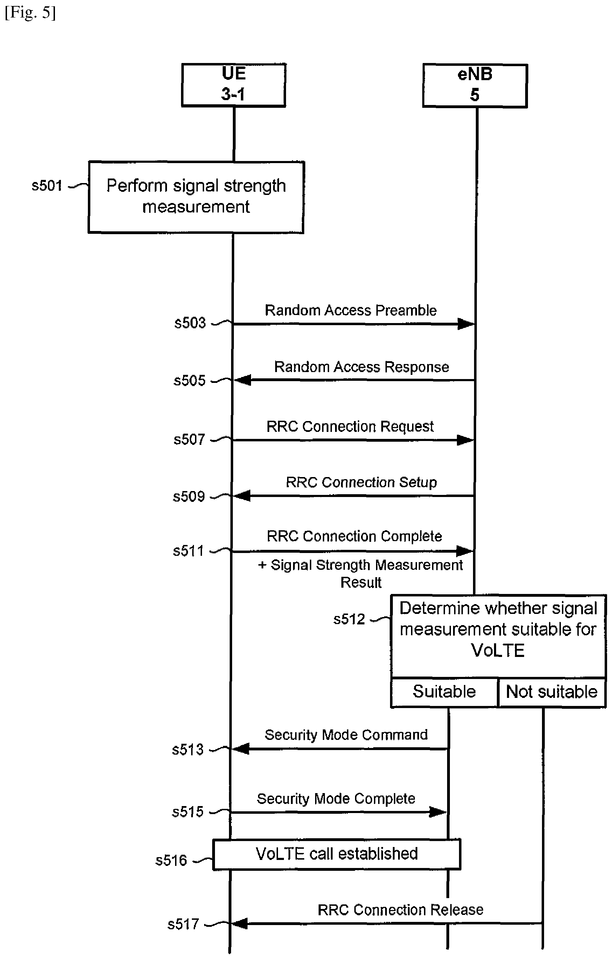

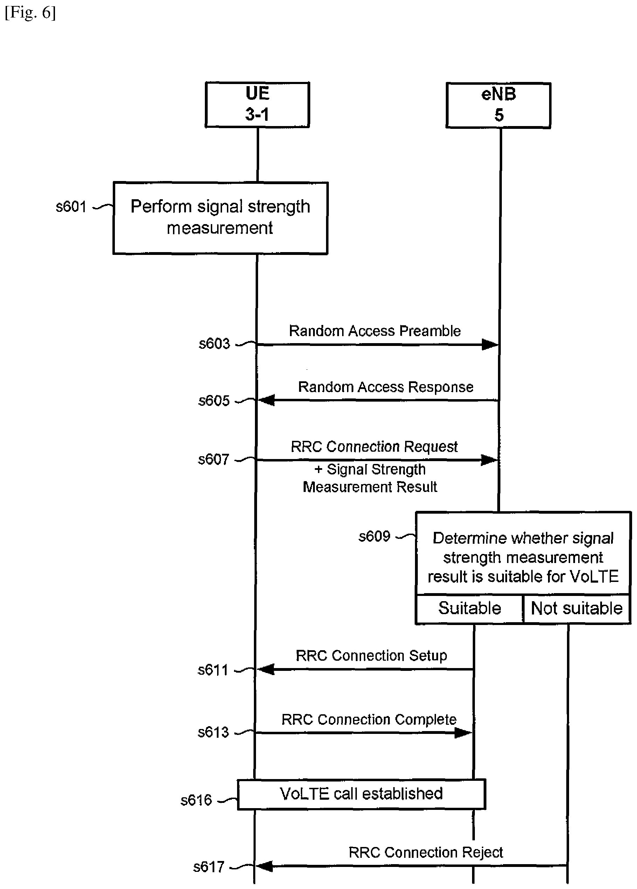

Figures 5 and 6 illustrates, in simplified form, two exemplary procedures according to an example in which the UE 3-1, in idle mode, initiates a VoLTE call and provides signal strength measurements to the eNB 5 in order to allow the eNB 5 to quickly determine if VoLTE is viable or if the call needs to be transferred to another RAT.

At step s501 the UE 3-1 performs signal strength measurement of reference signals transmitted by the eNB 5. As in the previous example, these signal strength measurements may comprise at least one of RSRP, RSRQ and RSSI signal strength measurements.

At step s503, the first step of initiating a VoLTE call is performed when the UE 3-1 transmits a random access preamble to the eNB 5. The eNB 5 responds at step s505 with a random access response. Next, at step s507, the UE 3 sends an RRC connection request to the eNB 5 and at step s509 the eNB 5 responds with an RRC connection setup message. At step s511, the UE 3-1 sends an RRC connection complete message to the eNB 5, where the RRC connection complete message includes a signal strength measurement result on the signal strength measurement performed at step s501. At step s512, the eNB 5 uses the signal strength measurement result transmitted with the RRC connection complete message to determine whether the signal strength received by the UE 3-1 is suitable for a VoLTE call by comparing the signal strength measurement with at least one VoLTE threshold, such as the VoLTE thresholds described above. If the signal strength is considered suitable, the eNB 5 proceeds to step s513 where it transmits a security mode command to the UE 3-1. The UE 3-1 then forms with a security mode to complete message at step s515, and at step s516 a VoLTE call is established.

If, on the other hand, the signal strength is not considered suitable for a VoLTE call by the eNB 5, the eNB 5 proceeds to step s517 where an RRC connection release message is transmitted to the UE 3-1.

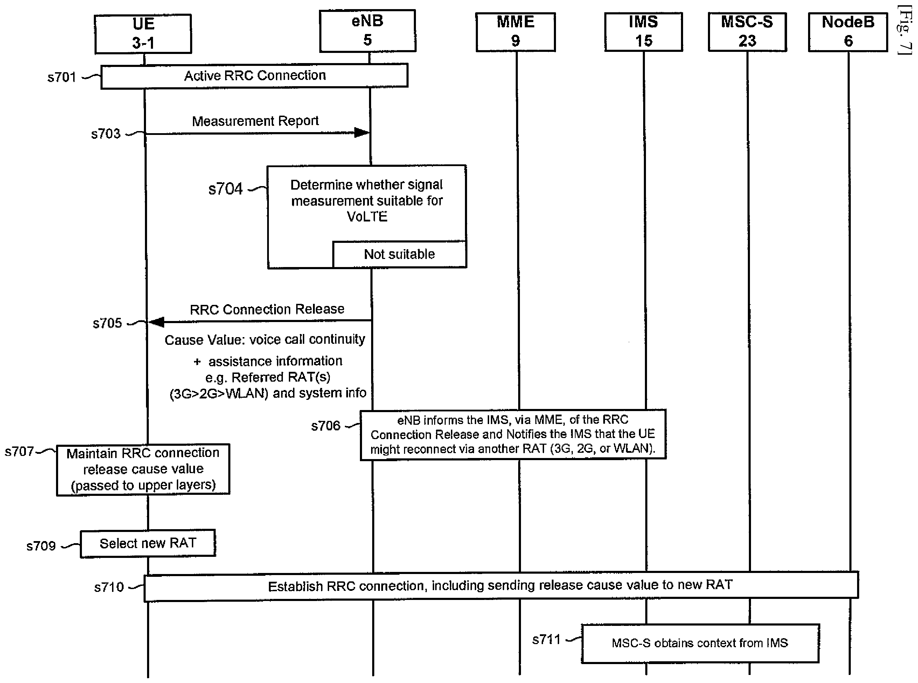

The RRC connection release procedure between the eNB 5 and the UE 3-1 is an enhanced RRC connection release procedure in which the eNB 5 provides additional information to the UE to aid the voice call continuity. For example, the RRC connection release messages transmitted at step s517 may include a new RRC connection release cause value, along with an indication of preferred RAT and associated assistance information. The enhanced RRC connection release procedure is described in more detail in relation to Figure 7 below.

Figure 6 illustrates, in simplified form, an alternative procedure in which the UE 3-1, in idle mode, initiates a VoLTE call and provides signal strength measurements to the eNB 5 in order to allow the eNB 5 to quickly determine if VoLTE is viable or if the call needs to be transferred to another RAT. The procedure illustrated in Figure 6 is similar to that illustrated in Figure 5 except that the signal strength measurement result is sent to the eNB 5 at a different point in the procedure.

At step s601 the UE 3-1 performs a signal strength measurement in the same way as described in relation to Figure 5. At step s603 the first step of initiating a VoLTE call is performed when the UE transmits a random access preamble to the eNB 5. At step s605, the eNB 5 responds with a random access response message. At step s607, the UE 3-1 transmits an RRC connection request to the eNB 5, where the RRC connection request includes a signal strength measurement result. Next, at step s609, the eNB 5 uses the signal strength measurement result transmitted with the RRC connection request to determine whether the signal strength received by the UE 3-1 is suitable for a VoLTE call by comparing the signal strength measurement with at least one VoLTE threshold, such as the VoLTE thresholds described above. If the signal strength is considered suitable, the eNB 5 proceeds to step s611 where it transmits an RRC connection set up message to the UE 3-1, at step s613 the UE 3-1 responds with an RRC connection complete message, and at step s616 a VoLTE call is established.

However, if the signal strength measurement in considered not suitable for a VoLTE call, the eNB 5 proceeds to step s617 where an RRC connection reject message is transmitted to the UE 3-1.

In a similar way as stated above in relation to Figure 5, preferably the RRC connection reject procedure between the eNB 5 and the UE 3-1 is an enhanced RRC connection reject procedure. For example, the RRC connection reject messages transmitted at step s617 may include a new RRC connection reject cause value, along with an indication of preferred RAT and associated assistance information. The enhanced RRC connection release/reject procedure is described in more detail in relation to Figure 7 below.

It can be seen that, in the example of Figure 5, signal strength information is sent to the eNB 5 by the UE 3-1 in an RRC connection complete message. Contrastingly, in the example of Figure 6, signal strength information is sent to the eNB 5 by the UE 3-1 in an RRC connection request message. However, signal strength information may be provided to the eNB 5 at other points in the procedure.

For example, the signal strength information may be provided as part of a random access (RA) procedure. However, since space is limited in RA message 1 (being designed for preamble transmission), the partitioning of RA resources between modes A and B (currently used for indicating different coverage levels for machine type communication devices) may be reused by VoLTE devices.

In a further example, signal strength information may be provided to the eNB 5 in a new request/response RRC message before security activation. Alternatively, the signal strength information may be provided to the eNB 5 after security activation (although it will be appreciated that this is relatively late in the procedure).

In a further example, the UE 3-1 may provide a single bit (e.g. in any of the messages described above) rather than a complete set of measurement results. This bit may represent a trigger to indicate, for example, whether the signal strength is above or below a threshold. The thresholds for such single bit trigger may be broadcasted or transmitted in dedicated signalling.

Providing a single bit rather than a complete set of measurement results beneficially reduces signalling, and allows signal strength information to be provided in messages having fixed sizes, such as an RRC Connection request. Furthermore, where the UE 3-1 is transmitting signal strength information before authentication has taken place, sending a single bit poses a security risk than sending measurement results (for example it is unlikely that the UE location can be determined from the single bit alone).

### Enhanced RRC Connection Release/Reject Procedure

Figure 7 illustrates, in simplified form, a procedure performed by the communication system 100 as illustrated in Figure 1 which includes an enhanced RRC connection release procedure in which a dedicated 'release cause' value is used to indicate that an RRC Connection Release is due to voice call continuity requirements.

At step s701, an active VoLTE RRC connection exists between the UE 3-1 and the eNB 5. At step s703 the UE 3-1 transmits a measurement report to the eNB 5, where the measurement report comprises a signal strength measurement of reference signals transmitted by the eNB 5. At step s704, the eNB 5 uses the signal strength measurement results transmitted in the measurement report to determine whether the signal strength received by UE 3-1 is suitable for a VoLTE call. If the signal strength measurement is considered suitable for a VoLTE call, the eNB 5 proceeds to establish a VoLTE call with the UE 3-1. However, if the signal strength measurement is not considered suitable for a VoLTE call, the eNB 5 proceeds to step s705 where it transmits an RRC connection release message to the UE 3-1. According to the enhanced RRC connection release procedure, the RRC connection release message comprises a RRC connection release cause value which indicates that the release cause is "voice call continuity". Preferably, the RRC connection release message also includes assistance information; including information indicating a preferred RAT(s) for voice call continuity (e.g. indicating a priority order for RATs) and further including associated information, such as system information of the preferred RAT(s).

It is noted that the assistance information may be included with the RRC connection release message or may be transmitted separately from the RRC connection release message.

As step s706 the eNB 5 informs the IMS, via the MME 9, of the RRC connection release and notifies the IMS that the UE 3-1 may attempt to reconnect via another RAT for voice call continuity. In this example the other RAT may be, for example, a 3G, 2G or WLAN RAT.

At step s707, the UE 3-1 maintains the RRC connection release cause value in its upper layers, for example NAS, IMS or IP.

At step s709 the UE 3-1 selects a new RAT with which to attempt to connect for voice call continuity, using the assistance information received at step s705. Then, at step s710, the UE 3-1 establishes a connection with the chosen RAT, in this case establishing an RRC connection with the NodeB 6 of the 3G network (UTRAN).

At step s711, the MSC-S 23 of the 3G network associated with NodeB 6 obtains the context for the voice call with the mobile device from the IMS 15.

Once the MSC-S 23 has obtained the context, the voice call can be continued via the 3G network. Preferably, the call will continue seamlessly; in some systems if the procedure takes less than 20 msec then no packets will be lost.

In the above description in relation to Figure 7, the RRC connection release procedure is enhanced by including extra information (e.g. a new cause value and assistance information) with an RRC connection release message. However, it will be appreciated that the RRC connection reject procedure can be enhanced in the same way by including the extra information with an RRC connection reject message (for example by including a cause value identifying the cause for rejecting the RRC connection).

### WLAN Target RAT

In the scenario where the UE 3-1, when in connected mode, attempts to establish VoLTE call and the UE 3-1 is transferred to WLAN for the call, it may take a longer time for an association between the UE 3-1 and the WLAN to be established. This may result in the ongoing voice call being affected.

However, if the UE 3-1 has received the RAT priority order information as described above, and the WLAN has a high priority for voice call (e.g. higher than 2G/3G), then the mobile device may start association with the WLAN earlier. Furthermore, the eNB may set the one or more thresholds accordingly (e.g. a higher single strength threshold) to ensure that there is enough time to cater for a delay arising from WLAN association.

### <Benefits, Modifications and alternatives>

Detailed example embodiments have been described above. As those skilled in the art will appreciate, a number of modifications and alternatives can be made to the above example embodiments whilst still benefiting from the inventions embodied therein. By way of illustration only a number of these alternatives and modifications will now be described.

In the above example embodiments, the mobile devices are cellular telephones. It will be appreciated that the above example embodiments could be implemented using devices other than mobile telephones such as, for example, personal digital assistants, laptop computers, web browsers, etc. The above example embodiments are applicable to non-mobile or generally stationary user equipment as well.

In the above example embodiments, a number of software modules were described. As those skilled in the art will appreciate, the software modules may be provided in compiled or un-compiled form and may be supplied to the mobile device, eNB or WT as a signal over a computer network, or on a recording medium. Further, the functionality performed by part or all of this software may be performed using one or more dedicated hardware circuits.

The IMS 15 may comprise a number of entities or 'functions' for delivering the IP multimedia services to the mobile devices 3. It will be appreciated that the functions may be provided as separate communication entities. Alternatively, some or all of the functions may be integrated into a single communication entity.

The IMS 15 may include a Call State Control Function (CSCF), which comprises a Proxy CSCF (P-CSCF), an Interrogating CSCF (I-CSCF) and a Serving CSCF (S-CSCF). The IMS 15 may also include an Application Server (AS) and a Home Subscriber Server (HSS).

The CSCF, in this example, is a SIP server that implements IMS call session control functionality for the mobile device 3. The CSCF also supports the DIAMETER protocol for communicating with the HSS.

The P-CSCF provides connectivity between the mobile devices 3 and the IMS 15. The P-CSCF is configured to handle all SIP requests and responses between the mobile devices 3 and the IMS 15. The P-CSCF also manages security and Quality of Service (QoS).

The I-CSCF acts as a forwarding point for the IMS 15, as remote servers address SIP packets to the IP address of the I-CSCF. The I-CSCF is also configured to communicate with the HSS to retrieve the address of the S-CSCF for a SIP request.

The S-CSCF is configured to process the location registration of each mobile device 3, and also to perform user authentication and VoLTE call routing.

The AS is responsible for end-to-end communications between (an appropriate application in) the mobile device 3 and a corresponding application hosted by the AS (and/or a node connected to it).

The HSS is responsible for storing and managing subscriber data and provides details of the subscribers to the other entities within the IMS network.

Although not necessarily shown in Figure 2, the mobile device 3 will of course have all the usual functionality of a conventional mobile device 3 (such as a user interface 35) and this may be provided by any one or any combination of hardware, software and firmware, as appropriate. Software may be pre-installed in the memory 39 and/or may be downloaded via the telecommunication network or from a removable data storage device (RMD), for example.

It will be appreciated that whilst it is envisaged that the variation in which the eNB 5 determines whether the LTE signal strength is sufficient for a VoLTE call represents a possible alternative to the example in which the mobile device 3-1 determines whether the LTE signal strength is sufficient for a VoLTE call, it may be beneficial for both options to be integrated into a single communication system. The options may, for example, be part of a single integrated process in which both the mobile device 3-1 and the eNB 5 check whether the LTE signal strength is sufficient for a VoLTE call.

The mobile device 3-1 may compare its signal strength measurement with the at least one threshold when in connected mode, preferably periodically, and if it determines that the signal strength is below the associated threshold it transmits a RRC Relocation request to the eNB, specifying that the cause is voice call continuity. In response, an enhanced RRC Connection Release may be performed as described above.

In relation to Figure 4, in alternative examples, no assistance information is transmitted by the eNB 5 to the UE 3-1, and therefore the UE 3-1 selects an alternative RAT without use of assistance information.

The one or more thresholds, and the assistance information, may not be broadcast by the eNB 5, and instead may be sent directly to mobile devices 3 by the eNB 5. This may allow the eNB 5 to tailor the thresholds and/or the assistance information for each mobile device 3.

It is noted that the broadcast of VoLTE thresholds by an eNB may also implicitly indicate that the eNB supports the use of VoLTE thresholds. Furthermore, an eNB may broadcast an indication that it supports VoLTE thresholds, optionally without broadcasting specific thresholds. In such a case, a UE may determine thresholds itself, for example based on capabilities of the eNB and UE.

It is noted that the VoLTE specific thresholds may also be used for idle mode mobility. For example, a UE 3-1 may decide whether to select a 4G cell in idle mode mobility based on whether measurements of reference signals from the 4G cell are above a VoLTE specific threshold. It with be appreciated that generally, when a UE is performing idle mode mobility, it is not known whether it will establish a VoLTE connection or a data service connection in the future. Accordingly, the VoLTE specific thresholds may particularly beneficially be used for UEs which support VoIP and which do not support a data connection, as such UEs will only establish VoLTE connections.

The priority order of the RATs can be decided by the eNB 5, or may be configured by the operator during an operations, administration and maintenance (OAM) procedure. If decided by the eNB 5, the eNB can determine the coverage area of the other available RATs, either by performing signal measurements itself, or by instructing the UE to provide measurement reports relating to each of the RATs. The eNB 5 then decides the priority order of the RATs based on the coverage areas. Situations where the priority order of the RATs is configured by the operator may include the case where, for example, the whole LTE cell of the eNB 5 has overlaid UMTS cell coverage. The priority order may also be determined via any combination of the above options. Furthermore, both UEs and eNBs can use additional information to determine priority order, such as minimisation of drive tests (MDT) information and self-organising network (SON) information.

In order to know what cells are present, the eNB 5 may ask the UE 3 to perform location reporting to determine the position of the UE 3. Furthermore, the UE may report 'fingerprints' comprising the radio signal level/signal strength of, for example, up to 6 cells including other RATs. The eNB 5 may use this 'fingerprint' to decide priority accordingly. The UE location and 'fingerprint' can be used in combination with radio quality when a UE 3 is in connected mode.

Although it is described above that the MSC server 23 obtains the context from the IMS, it is noted that an evolved Packet Data Gateway (ePDG) may additionally or alternatively perform this task.

In examples where the UE provides signal strength information using a single bit, the UE may separately indicate to the RAT that it has the capability to provide signal strength information using a single bit. However, the single bit and the capability indication may be combined together - for example a predefined value of the single bit may indicate both that the UE has the capability to provide signal strength information using a single bit and that the signal strength measurement is below a threshold.

Additionally or alternatively, the one or more thresholds may include a power headroom (PH) reporting threshold for VoLTE. This may beneficial if VoLTE is not viable due to UE power being limited. In this case, the UE 3-1 can provide a PH report to the eNB 5 based on this new threshold (this is similar to the RSRP, RSRQ and/or RSSI thresholds described above, but done at Media Access Control (MAC) layer reporting).

It will be appreciated that whilst much of the above description is based on an RRC implementation, the procedure could instead be based on a MAC implementation, for example as in the power headroom (PH) reporting example above.

For 2G/3G RATs, the information sent by the eNB 5 to the UE 3-1 may include thresholds for VoLTE establishment and target RAT cell information for 2G/3G case. However for WLAN RATs, the information sent by the eNB 5 to the UE 3-1 may include VoLTE thresholds and target WLAN information (e.g. WLAN AP ID/ Basic Service Set ID (BSSID)/other IDs). Beneficially, therefore, if WLAN is the highest priority RAT for voice call continuity then the UE 3 is made aware of this in advance.

The system information of the preferred RAT(s) may include information similar to that used for circuit-switched fallback, for example the UTRA specific system information contained in "utra-BCCH-Container-r10".

It is noted that the VoLTE threshold information and/or assistance information can be provided in new SIB or existing SIB. For example, a WLAN offload indicator in an existing SIB may additionally include VoLTE thresholds. The "WLAN offload config" in SIB 17 (as shown in the version of SIB 17 below, only the relevant part of which has been illustrated) can be used as reference. It is noted that additional information may be added to SIBs such as SIB 17, however it is expected that the same or similar information to that in SIB 17 can be used.

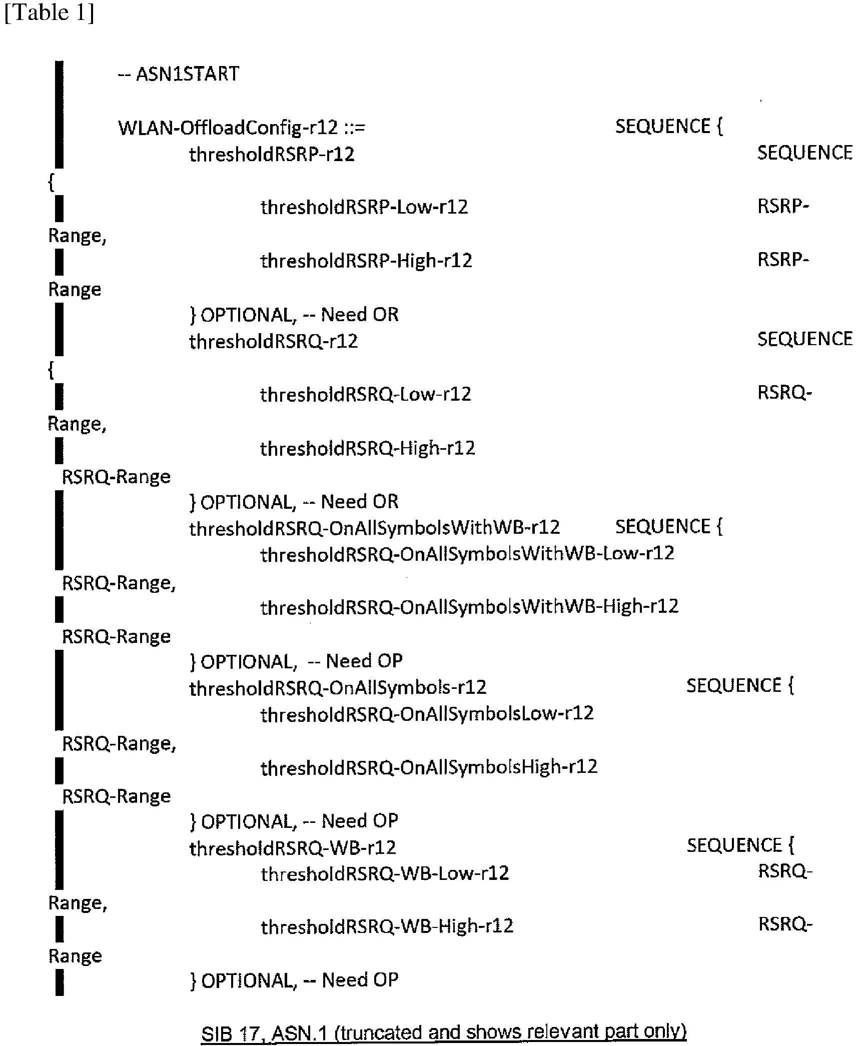

In order to implement voice call continuity from VoLTE to another RAT, at the end of LTE coverage, similar information may be used, in an RRC Connection Release message, to that used for CS fallback switching (as highlighted in the truncated version of the RRC Connection Release message shown below, only the relevant part of which has been illustrated). For example the 'voice call continuity' release cause for VoLTE may, for example, be implemented as a new 'ReleaseCause' in "spare1".

Similarly, to shorten the time required to connect to a 2G/3G RAT the assistance information may comprise target cell system information that is the same, or similar to the system information broadcast for CS fallback.

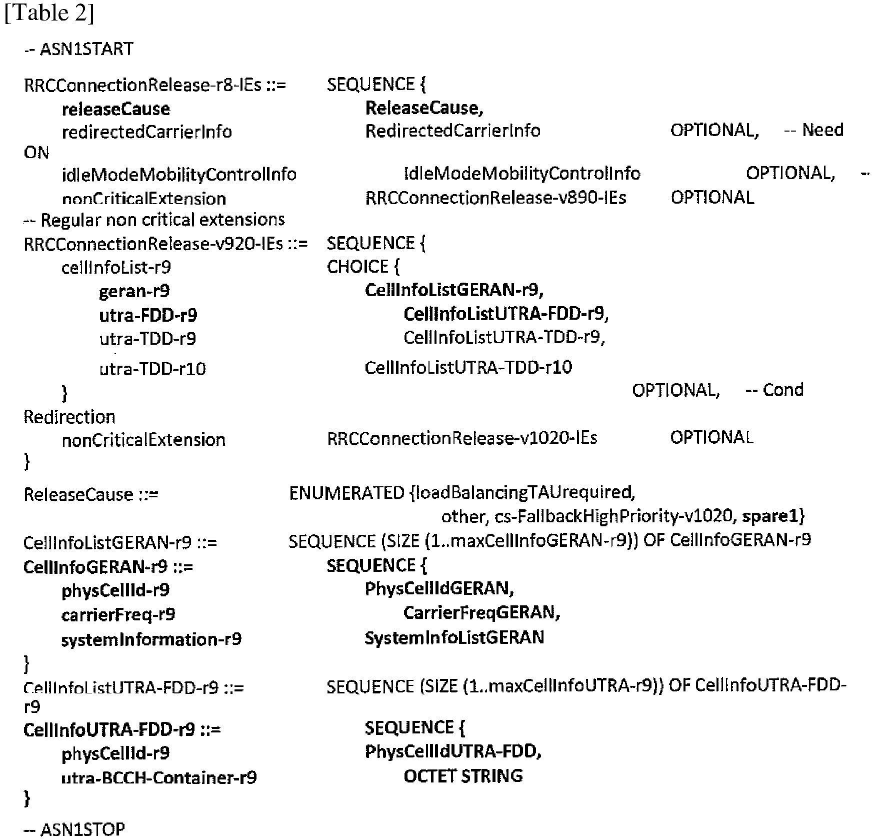

It will be appreciated that the determination of whether or not the signal measurements meet the at least one criterion may be based on a comparison of said signal measurements with at least one threshold. The at least one threshold may comprise a signal strength threshold below which VoLTE communication is not considered sustainable. For example, the at least one threshold may comprise at least one of a Reference Signal Received Power (RSRP) threshold, a Reference Signal Received Quality (RSRQ) threshold, a Reference Signal Strength Indicator (RSSI) threshold and a power headroom (PH) threshold.

It will be appreciated that when the communication device determines whether VoLTE communication via the communication connection with the base station can be sustained, the communication device may be in idle or connected mode.

The controller of the communication device is further configured to control the communication device to receive assistance information (e.g. indicating a priority / priority order associated with the at least one non-LTE RAT and/or comprising system information associated with the at least one non-LTE RAT) to assist with the selection of and/or connection to at least one non-LTE radio access technology (RAT) for establishing a voice call. In this case, the controller may be further configured to control the communication device to select a non-LTE RAT for the continuation of voice communication, based on the assistance information. The controller of the communication device may be further configured to control the communication device to connect to non-LTE RAT to establish a voice call, based on the assistance information.

The at least one threshold may comprise a power headroom (PH) threshold and the controller of the communication device may be further configured to control the communication device transmit a PH report to the base station based on the PH threshold.

The controller of base station is further configured to control the base station to:
transmit, to the communication device, assistance information (e.g. indicating a priority / priority order associated with at least one non-LTE RAT and/or comprising system information associated with the at least one non-LTE RAT) to assist with the selection of and/or connection to at least one non-LTE radio access technology (RAT) for establishing a voice call.

It will be appreciated that the message indicating that the communication connection cannot be sustained may comprise an indication that a cause of the message is voice call continuity.

The communication device may provide the at least one result of the signal measurements to the base station in a Radio Resource Control (RRC) Connection Complete message; and the message indicating that the communication connection cannot be sustained may comprise an RRC Connection Release message.

The communication device may provide the at least one result of the signal measurements to the base station in a Radio Resource Control (RRC) Connection Request message; and the message indicating that the communication connection cannot be sustained may comprise an RRC Connection Reject message.

The at least one result of the signal measurements may comprise an indicator (e.g. a one bit indicator) to indicate whether or not the signal measurements meet at least one pre-determined criterion.

The controller of the communication device is further configured to control the communication device to: determine whether or not the signal measurements meet the at least one pre-determined criterion based on a comparison of said signal measurements with at least one threshold. In this case, the at least one threshold may be a signal strength threshold below which VoLTE communication is not considered sustainable.

The controller of the communication device may be further configured to control the communication device to: provide the indication that a cause of the message is voice call continuity to the non-LTE RAT when the communication connection via the non-LTE RAT is established.

The controller of the communication device may be further configured to control the communication device to: receive assistance information (e.g. indicating a priority / priority order associated with the at least one non-LTE RAT and/or comprising system information associated with the at least one non-LTE RAT) to assist with selection of and/or connection to the non-LTE RAT for establishing or maintaining the voice call.

The controller of the communication device may be further configured to control the communication device to: select the non-LTE RAT for the continuation of voice communication, based on the assistance information.

The controller of the communication device may be further configured to control the communication device to: provide the indication that a cause of the message is voice call continuity to the non-LTE RAT when the communication connection via the non-LTE RAT is established.

The controller of the base station may be further configured to control the base station to: transmit, to the communication device, assistance information (e.g. indicating a priority / priority order associated with the at least one non-LTE RAT and/or comprising system information associated with the at least one non-LTE RAT) to assist with selection of and/or connection to at least one non-LTE radio access technology (RAT) for establishing a voice call.

The controller of the base station may be further configured to control the base station to: transmit, to a mobility management entity (MME), a further message indicating that the communication connection with the communication device cannot be sustained.

The further message indicating that the communication connection with the communication device cannot be sustained may comprise a notification that the communication device may establish a communication connection via a non-LTE RAT in order to establish or maintain a voice call via that non-LTE RAT.

According to an example, there is provided a method performed by a core network node of a long term evolution (LTE) communication system, the method comprising the steps of receiving, from a base station, information indicating a communication connection associated with a voice over LTE (VoLTE) voice call has been released and information indicating a possibility that said voice call will be continued via another radio access technology (RAT); notifying an internet protocol multimedia subsystem (IMS) that the communication connection associated with the VoLTE voice call has been released; and notifying the IMS of the possibility that said voice call will be continued via another RAT.

According to another example, there is provided a method performed by a communication node of a Universal Terrestrial Radio Access Network (UTRAN), the method comprising the steps of receiving, from an internet protocol multimedia subsystem (IMS), information for supporting the continuation of a voice call via a radio access technology (RAT) of the UTRAN, wherein a voice over LTE (VoLTE) connection over which the voice call was previously being provided has been released, and wherein said information comprises context information associated with the VoLTE connection.

Various other modifications will be apparent to those skilled in the art and will not be described in further detail here.

While the invention has been particularly shown and described with reference to example embodiments thereof, the invention not limited to these embodiments. It will be understood by those of ordinary skill in the art that various changes in form and details may be made therein without departing from the scope of the present invention as defined by the claims.

This application is based upon and claims the benefit of priority from United Kingdom patent No. 2547726, filed on February 29, 2016.

## Claims

1. A communication device (3-1) for a long term evolution, LTE, communication system, the communication device (3-1) comprising:
a controller (37) and a transceiver (31), wherein the controller (37) is configured to control the communication device (3-1) to:
establish and engage in Voice over LTE, VoLTE, communication via a communication connection with a base station (5);
obtain information indicating at least one criterion for determining whether VoLTE communication via the communication connection with the base station (5) can be sustained;
perform signal measurements for signals received from the base station (5);
and
determine whether VoLTE communication via the communication connection with the base station (5) can be sustained based on whether or not the signal measurements meet the at least one criterion,
wherein
the determination of whether or not the signal measurements meet the at least one criterion is based on a comparison of said signal measurements with at least one threshold,
the controller (37) is further configured to control the communication device (3-1) to receive assistance information to assist with selection of and/or connection to at least one non-LTE radio access technology, RAT, for establishing a voice call,
the assistance information, in case of a target RAT is a Wireless Local Area Network, WLAN, includes information that allows the communication device (3-1) to skip authentication in the WLAN security, and
when moving from a network to the WLAN, the same credentials as used in the network and included in the assistance information are used to skip the authentication and connect to the WLAN.

2. A communication device (3-1) according to claim 1, wherein the at least one threshold comprises a signal strength threshold below which VoLTE communication is not considered sustainable.

3. A communication device (3-1) according to claim 2, wherein the at least one threshold comprises at least one of a Reference Signal Received Power, RSRP, threshold, a Reference Signal Received Quality, RSRQ, threshold, a Reference Signal Strength Indicator, RSSI, threshold, and a power headroom, PH, threshold

4. A communication device (3-1) according to claim 1, wherein the controller (37) is further configured to control the communication device (3-1) to select a non-LTE RAT for the continuation of voice communication, based on the assistance information.

5. A communication device (3-1) according to claim 1, wherein the controller (37) is further configured to control the communication device (3-1) to connect to a non-LTE RAT to establish a voice call, based on the assistance information.

6. A communication device (3-1) according to any one of claims 1 to 5, wherein the at least one threshold comprises a PH threshold and wherein the controller (37) is further configured to control the communication device (3-1) to transmit a PH report to the base station (5) based on the PH threshold.

7. A base station (5) for a long term evolution, LTE, communication system, the base station (5) comprising:
a controller (57) and a transceiver (51) wherein the controller (57) is configured to control the base station (5) to:
establish and engage in Voice over LTE ,VoLTE, communication via a communication connection with a communication device (3-1);
determine, when the base station (5) is engaged in at least one of: (i) ongoing VoLTE communication via the communication connection; and (ii) an attempt to establish VoLTE communication via the communication connection, that the communication connection cannot be sustained; and
transmit, to the communication device (3-1), when it has been determined that the communication connection cannot be sustained, a message indicating that the communication connection cannot be sustained, wherein the message comprises an indication that a cause of the message is voice call continuity,
wherein
the controller (57) is further configured to control the base station (5) to: transmit, to the communication device (3-1), assistance information to assist with selection of and/or connection to at least one non-LTE radio access technology, RAT, for establishing a voice call,
the assistance information, in case of a target RAT is a Wireless Local Area Network, WLAN, includes information that allows the communication device (3-1) to skip authentication in the WLAN security, and
when the communication device (3-1) moves from a network to the WLAN, the same credentials as used in the network and included in the assistance information are used to skip the authentication and connect to the WLAN.

8. A base station (5) according to claim 7, wherein the controller (57) is further configured to control the base station (5) to: transmit, to a mobility management entity, MME (9), a further message indicating that the communication connection with the communication device (3-1) cannot be sustained.

9. A base station (5) according to claim 8, wherein the further message indicating that the communication connection with the communication device (3-1) cannot be sustained comprises a notification that the communication device (3-1) may establish a communication connection via a non-LTE RAT in order to establish or maintain a voice call via that non-LTE RAT.

10. A method performed by a communication device (3-1) operable to establish and engage in Voice over LTE, VoLTE, communication via a communication connection with a base station (5), the method comprising:
obtaining (s401) information indicating at least one criterion for determining whether VoLTE communication via the communication connection with the base station (5) can be sustained;
performing (s405) signal measurements for signals received from the base station (5);
determining (s407) whether VoLTE communication via the communication connection with the base station (5) can be sustained based on whether or not the signal measurements meet the at least one criterion,
wherein
the determination of whether or not the signal measurements meet the at least one criterion is based on a comparison of said signal measurements with at least one threshold,
controlling (s403) the communication device (3-1) to receive assistance information to assist with selection of and/or connection to at least one non-LTE radio access technology, RAT, for establishing a voice call,
wherein the assistance information, in case of a target RAT is a Wireless Local Area Network, WLAN, includes information that allow the communication device (3-1) to skip authentication in the WLAN security, and
when moving from a network to the WLAN, the same credentials as used in the network and included in the assistance information are used to skip the authentication and connect to the WLAN.

## Patentansprüche

1. Kommunikationsvorrichtung (3-1) für ein Long Term Evolution, LTE, Kommunikationssystem, wobei die Kommunikationsvorrichtung (3-1) aufweist:
eine Steuerung (37) und einen Transceiver (31), wobei die Steuerung (37) konfiguriert ist, um die Kommunikationsvorrichtung (3-1) zu steuern, um:
eine Voice over LTE, VoLTE, Kommunikation über eine Kommunikationsverbindung mit einer Basisstation (5) aufzubauen und sich daran zu beteiligen;
Information zu gewinnen, die mindestens ein Kriterium zum Bestimmen, ob VoLTE-Kommunikation über die Kommunikationsverbindung mit der Basisstation (5) aufrechterhalten werden kann, angibt;
Signalmessungen für aus der Basisstation (5) empfangene Signale durchzuführen; und
auf Basis dessen, ob die Signalmessungen das mindestens eine Kriterium erfüllen oder nicht, zu bestimmen, ob VoLTE-Kommunikation über die Kommunikationsverbindung mit der Basisstation (5) aufrechterhalten werden kann,
wobei die Bestimmung, ob die Signalmessungen das mindestens eine Kriterium erfüllen oder nicht, auf einem Vergleich der Signalmessungen mit mindestens einer Schwelle basiert,
wobei die Steuerung (37) desweiteren konfiguriert ist, um die Kommunikationsvorrichtung (3-1) zu steuern, um Assistenzinformation zu empfangen, um bei einer Auswahl mindestens einer und/oder einer Verbindung mit mindestens einer nicht-LTE-Funkzugangstechnologie, RAT, zum Aufbauen eines Sprachanrufs zu assistieren,
wobei im Fall, dass eine Ziel-RAT ein Wireless Local Area Network, WLAN, ist, die Assistenzinformation Information aufweist, die der Kommunikationsvorrichtung (3-1) erlaubt, Authentifizierung in der WLAN-Sicherheit zu überspringen, und
bei Bewegung von einem Netzwerk zu dem WLAN die gleichen Anmeldeinformationen, wie sie in dem Netzwerk verwendet und in der Assistenzinformation enthalten sind, verwendet werden, um die Authentifizierung zu überspringen und mit dem WLAN zu verbinden.

2. Kommunikationsvorrichtung (3-1) nach Anspruch 1, wobei die mindestens eine Schwelle eine Signalstärkeschwelle aufweist, unterhalb derer VoLTE-Kommunikation als nicht aufrechterhaltbar betrachtet wird.

3. Kommunikationsvorrichtung (3-1) nach Anspruch 2, wobei die mindestens eine Schwelle mindestens eine der folgenden aufweist: eine Referenzsignal-Empfangsstärke, RSRP, Schwelle, eine Referenzsignal-Empfangsqualität, RSRQ, Schwelle, eine Referenzsignal-Stärkeindikator, RSSI, Schwelle und eine Leistungsaussteuerungsreserve, PH, Schwelle.

4. Kommunikationsvorrichtung (3-1) nach Anspruch 1, wobei die Steuerung (37) desweiteren konfiguriert ist, um die Kommunikationsvorrichtung (3-1) zu steuern, um auf Basis der Assistenzinformation eine nicht-LTE RAT für die Fortführung von Sprachkommunikation auszuwählen.

5. Kommunikationsvorrichtung (3-1) nach Anspruch 1, wobei die Steuerung (37) desweiteren konfiguriert ist, um die Kommunikationsvorrichtung (3-1) auf Basis der Assistenzinformation zu steuern, um mit nicht-LTE-RAT zu verbinden, um einen Sprachanruf aufzubauen.

6. Kommunikationsvorrichtung (3-1) nach einem der Ansprüche 1 bis 5, wobei die mindestens eine Schwelle eine PH-Schwelle aufweist, und wobei die Steuerung (37) desweiteren konfiguriert ist, um die Kommunikationsvorrichtung (3-1) zu steuern, um einen PH-Bericht auf Basis der PH-Schwelle zu der Basisstation (5) zu senden.

7. Basisstation (5) für ein Long Term Evolution, LTE, Kommunikationssystem, wobei die Basisstation (5) aufweist:
eine Steuerung (57) und einen Transceiver (51), wobei die Steuerung (57) konfiguriert ist, um die Basisstation (5) zu steuern, um:
eine Voice over LTE, VoLTE, Kommunikation über eine Kommunikationsverbindung mit einer Kommunikationsvorrichtung (3-1) aufzubauen und sich daran zu beteiligen;
wenn die Basisstation (5) entweder (i) an einer laufenden VoLTE-Kommunikation über die Kommunikationsverbindung oder (ii) an einem Versuch, eine VoLTE-Kommunikation über die Kommunikationsverbindung aufzubauen, beteiligt ist, zu bestimmen, dass die Kommunikationsverbindung nicht aufrechterhalten werden kann; und
wenn bestimmt worden ist, dass die Kommunikationsverbindung nicht aufrechterhalten werden kann, eine Meldung, die angibt, dass die Kommunikationsverbindung nicht aufrechterhalten werden kann, zu der Kommunikationsvorrichtung (3-1) zu senden, wobei die Meldung eine Angabe enthält, dass ein Grund der Meldung eine Sprachanruffortführung ist,
wobei die Steuerung (57) desweiteren konfiguriert ist, um die Basisstation (5) zu steuern, um:
Assistenzinformation, um bei einer Auswahl mindestens einer und/oder einer Verbindung mit mindestens einer nicht-LTE-Funkzugangstechnologie, RAT, zum Aufbauen eines Sprachanrufs zu assistieren, zu der Kommunikationsvorrichtung (3-1) zu senden,
wobei im Fall, dass eine Ziel-RAT ein Wireless Local Area Network, WLAN, ist, die Assistenzinformation Information aufweist, die der Kommunikationsvorrichtung (3-1) erlaubt, Authentifizierung in der WLAN-Sicherheit zu überspringen, und
bei Bewegung der Kommunikationsvorrichtung (3-1) von einem Netzwerk zu dem WLAN die gleichen Anmeldeinformationen, wie sie in dem Netzwerk verwendet und in der Assistenzinformation enthalten sind, verwendet werden, um die Authentifizierung zu überspringen und mit dem WLAN zu verbinden.

8. Basisstation (5) nach Anspruch 7, wobei die Steuerung (57) desweiteren konfiguriert ist, um die Basisstation (5) zu: steuern, um eine weitere Meldung, die angibt, dass die Kommunikationsverbindung mit der Kommunikationsvorrichtung (3-1) nicht aufrechterhalten werden kann, zu einer Mobilitätsmanagementeinheit, MME (9), zu senden.

9. Basisstation (5) nach Anspruch 8, wobei die weitere Meldung, die angibt, dass die Kommunikationsverbindung mit der Kommunikationsvorrichtung (3-1) nicht aufrechterhalten werden kann, eine Mitteilung aufweist, dass die Kommunikationsvorrichtung (3-1) eine Kommunikationsverbindung über eine nicht-LTE RAT aufbauen könnte, um einen Sprachanruf über diese nicht-LTE RAT aufzubauen oder zu halten.

10. Verfahren, das von einer Kommunikationsvorrichtung (3-1) durchgeführt wird, die fähig ist, eine Voice over LTE, VoLTE, Kommunikation über eine Kommunikationsverbindung mit einer Basisstation (5) aufzubauen und sich daran zu beteiligen, wobei das Verfahren aufweist:
Gewinnen (s401) von Information, die mindestens ein Kriterium zum Bestimmen, ob VoLTE-Kommunikation über die Kommunikationsverbindung mit der Basisstation (5) aufrechterhalten werden kann, angibt;
Durchführen (s405) von Signalmessungen für aus der Basisstation (5) empfangene Signale;
Bestimmen (s407), ob VoLTE-Kommunikation über die Kommunikationsverbindung mit der Basisstation (5) aufrechterhalten werden kann, auf Basis dessen, ob die Signalmessungen das mindestens eine Kriterium erfüllen oder nicht,
wobei die Bestimmung, ob die Signalmessungen das mindestens eine Kriterium erfüllen oder nicht, auf einem Vergleich der Signalmessungen mit mindestens einer Schwelle basiert,
Steuern (s403) der Kommunikationsvorrichtung (3-1), um Assistenzinformation zu empfangen, um bei einer Auswahl mindestens einer und/oder einer Verbindung mit mindestens einer nicht-LTE-Funkzugangstechnologie, RAT, zum Aufbauen eines Sprachanrufs zu assistieren,
wobei im Fall, dass eine Ziel-RAT ein Wireless Local Area Network, WLAN, ist, die Assistenzinformation Information aufweist, die der Kommunikationsvorrichtung (3-1) erlaubt, Authentifizierung in der WLAN-Sicherheit zu überspringen, und
bei Bewegung von einem Netzwerk zu dem WLAN die gleichen Anmeldeinformationen, wie sie in dem Netzwerk verwendet und in der Assistenzinformation enthalten sind, verwendet werden, um die Authentifizierung zu überspringen und mit dem WLAN zu verbinden.

## Revendications

1. Dispositif de communication (3-1) pour un système de communication d'évolution à long terme, LTE, le dispositif de communication (3-1) comprenant:
un contrôleur (37) et un émetteur-récepteur (31), dans lequel le contrôleur (37) est configuré pour commander le dispositif de communication (3-1) pour:
établir et engager une communication voix sur LTE, VoLTE, via une connexion de communication avec une station de base (5);
obtenir des informations indiquant au moins un critère pour déterminer si une communication VoLTE via la connexion de communication avec la station de base (5) peut être poursuivie;
réaliser des mesures de signaux pour des signaux reçus de la station de base (5); et
déterminer si une communication VoLTE via la connexion de communication avec la station de base (5) peut être poursuivie selon que les mesures de signaux satisfont l'au moins un critère,
dans lequel
la détermination du fait que les mesures de signaux satisfassent ou non l'au moins un critère est basée sur une comparaison desdites mesures de signaux à au moins un seuil,
le contrôleur (37) est en outre configuré pour commander le dispositif de communication (3-1) pour recevoir des informations d'aide pour aider à une sélection de et/ou une connexion à au moins une technologie d'accès radioélectrique, RAT, non-LTE pour établir un appel vocal,
les informations d'aide, dans le cas où une RAT cible est un réseau local sans fil, WLAN, comprennent des informations qui autorisent le dispositif de communication (3-1) à sauter une authentification dans la sécurité WLAN, et
lors d'un déplacement d'un réseau vers le WLAN, les mêmes justificatifs d'identité, que ceux utilisés dans le réseau, et compris dans les informations d'aide sont utilisés pour sauter l'authentification et se connecter au WLAN.

2. Dispositif de communication (3-1) selon la revendication 1, dans lequel l'au moins un seuil comprend un seuil d'intensité de signal en dessous duquel il est considéré qu'une communication VoLTE ne peut pas être poursuivie.

3. Dispositif de communication (3-1) selon la revendication 2, dans lequel l'au moins un seuil comprend au moins un seuil de puissance reçue de signal de référence, RSRP, un seuil de qualité reçue de signal de référence, RSRQ, un seuil d'indicateur d'intensité de signal de référence, RSSI, et un seuil de marge de puissance, PH.

4. Dispositif de communication (3-1) selon la revendication 1, dans lequel le contrôleur (37) est en outre configuré pour commander le dispositif de communication (3-1) pour sélectionner une RAT non-LTE pour la continuation d'une communication vocale, sur la base des informations d'aide.

5. Dispositif de communication (3-1) selon la revendication 1, dans lequel le contrôleur (37) est en outre configuré pour commander le dispositif de communication (3-1) pour réaliser une connexion à une RAT non-LTE pour établir un appel vocal, sur la base des informations d'aide.

6. Dispositif de communication (3-1) selon l'une quelconque des revendications 1 à 5, dans lequel l'au moins un seuil comprend un seuil PH et dans lequel le contrôleur (37) est en outre configuré pour commander le dispositif de communication (3-1) pour transmettre un rapport PH à la station de base (5) sur la base du seuil PH.

7. Station de base (5) pour un système de communication d'évolution à long terme, LTE, la station de base (5) comprenant:
un contrôleur (57) et un émetteur-récepteur (51) dans laquelle le contrôleur (57) est configuré pour commander la station de base (5) pour:
établir et engager une communication voix sur LTE, VoLTE, via une connexion de communication avec un dispositif de communication (3-1);
déterminer, lorsque la station de base (5) est engagée dans au moins une parmi: (i) une communication VoLTE en cours via la connexion de communication; et (ii) une tentative d'établir une communication VoLTE via la connexion de communication, que la connexion de communication ne peut pas être poursuivie; et
transmettre, au dispositif de communication (3-1), lorsqu'il a été déterminé que la connexion de communication ne peut pas être poursuivie, un message indiquant que la connexion de communication ne peut pas être poursuivie, dans laquelle le message comprend une indication qu'une cause du message est la continuité d'un appel vocal,
dans laquelle
le contrôleur (57) est en outre configuré pour commander la station de base (5) pour: transmettre, au dispositif de communication (3-1), des informations d'aide pour aider à une sélection de et/ou une connexion à au moins une technologie d'accès radioélectrique, RAT, non-LTE pour établir un appel vocal,
les informations d'aide, dans le cas où une RAT cible est un réseau local sans fil, WLAN, cible, comprennent des informations qui autorisent le dispositif de communication (3-1) à sauter une authentification dans la sécurité WLAN, et
lorsque le dispositif de communication (3-1) se déplace d'un réseau vers le WLAN, les mêmes justificatifs d'identité que ceux utilisés dans le réseau et compris dans les informations d'aide sont utilisés pour sauter l'authentification et se connecter au WLAN.

8. Station de base (5) selon la revendication 7, dans laquelle le contrôleur (57) est en outre configuré pour commander la station de base (5) pour: transmettre, à une entité de gestion de la mobilité, MME (9), un autre message indiquant que la connexion de communication au dispositif de communication (3-1) ne peut pas être poursuivie.

9. Station de base (5) selon la revendication 8, dans laquelle l'autre message, indiquant que la connexion de communication au dispositif de communication (3-1) ne peut pas être poursuivie, comprend une notification selon laquelle le dispositif de communication (3-1) peut établir une connexion de communication via une RAT non-LTE afin d'établir ou de maintenir un appel vocal via cette RAT non-LTE.

10. Procédé réalisé par un dispositif de communication (3-1) permettant d'établir et engager une communication voix sur LTE, VoLTE, via une connexion de communication à une station de base (5), le procédé comprenant:
l'obtention (s401) d'informations indiquant au moins un critère pour déterminer si une communication VoLTE via la connexion de communication à la station de base (5) peut être poursuivie;
la réalisation (s405) de mesures de signaux pour des signaux reçus de la station de base (5);
déterminer (s407) si une communication VoLTE via la connexion de communication à la station de base (5) peut être poursuivie selon que les mesures de signaux satisfont ou non l'au moins un critère,
dans lequel
la détermination du fait que les mesures de signaux satisfassent ou non l'au moins un critère est basée sur une comparaison desdites mesures de signaux à au moins un seuil,
la commande (s403) du dispositif de communication (3-1) pour recevoir des informations d'aide pour aider à une sélection de et/ou une connexion à au moins une technologie d'accès radioélectrique, RAT, non-LTE pour établir un appel vocal,
dans laquelle les informations d'aide, dans le cas où une RAT cible est un réseau local sans fil, WLAN, comprennent des informations qui autorisent le dispositif de communication (3-1) à sauter une authentification dans la sécurité WLAN, et
lors d'un déplacement d'un réseau vers le WLAN, les mêmes justificatifs d'identité que ceux utilisés dans le réseau et compris dans les informations d'aide sont utilisés pour sauter l'authentification et se connecter au WLAN.
